# FASCICULE DE BREVET EUROPEEN

(11) **EP 2 244 906 B1**
(45) Date de publication et mention de la délivrance du brevet: **09.11.2011**
(21) Numéro de dépôt: 09714937.1
(22) Date de dépôt: 06.02.2009
(51) Int. Cl.: B60L 5/36, B60K 6/387, B60K 6/40

(54) **VÉHICULE HYBRIDE ET ENSEMBLE INCORPORANT CE VÉHICULE**
HYBRIDFAHRZEUG UND ANORDNUNG MIT EINEM SOLCHEN FAHRZEUG
HYBRID VEHICLE AND ASSEMBLY INCLUDING SUCH VEHICLE

(30) Priorité: 25.02.2008 FR 0800995
(43) Date de publication de la demande: 03.11.2010
(73) Titulaire: Envintive Sarl, 01390 Saint André De Corcy (FR)
(72) Inventeur: SCHAEFER, Jacques, F-01390 Saint André De Corcy (FR)
(74) Mandataire: Colombo, Michel
(86) Numéro de dépôt international: PCT/EP2009/051368
(87) Numéro de publication internationale: WO 2009/106415

(56) Documents cités:
- DE-A1- 1 949 041
- FR-A- 2 511 954
- US-A1- 2007 261 901
- US-A1- 2007 265 126

## Description

L'invention concerne un véhicule industriel hybride et un dispositif de distribution de tension pour ce véhicule.

Le déposant connaît des véhicules industriels hybrides comprenant :
- un arbre d'entraînement en rotation des roues motrices du véhicule, cet arbre présentant une première et une seconde extrémités, la première extrémité étant destinée à être mécaniquement raccordée aux roues motrices pour entraîner en rotation ces roues motrices.
- un moteur à combustion comprenant un arbre moteur destiné à être mécaniquement raccordé à la seconde extrémité de l'arbre d'entraînement pour entraîner en rotation les roues motrices à l'aide du moteur à combustion.
- un moteur électrique comprenant un rotor solidaire d'un arbre rotatif destiné à entraîner en rotation la seconde extrémité de l'arbre d'entraînement, et
- un mécanisme d'accouplement mécanique de l'arbre rotatif du moteur électrique à l'arbre d'entraînement pour entraîner en rotation les roues motrices à l'aide du moteur électrique,
- une boîte de vitesses mécaniquement accouplée d'un côté à l'arbre moteur et de l'autre côté à la seconde extrémité de l'arbre d'entraînement.

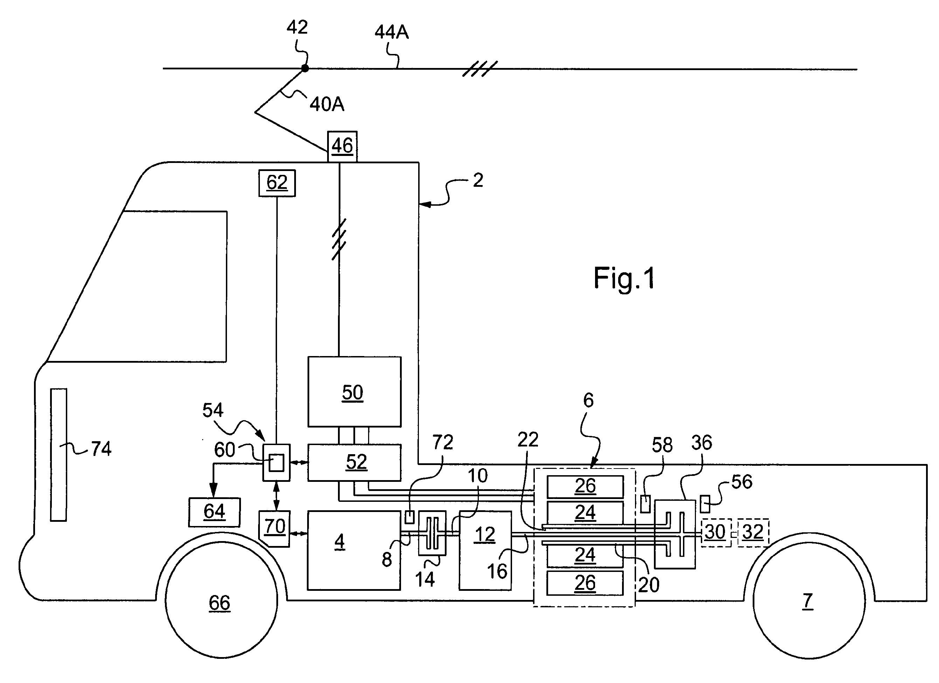

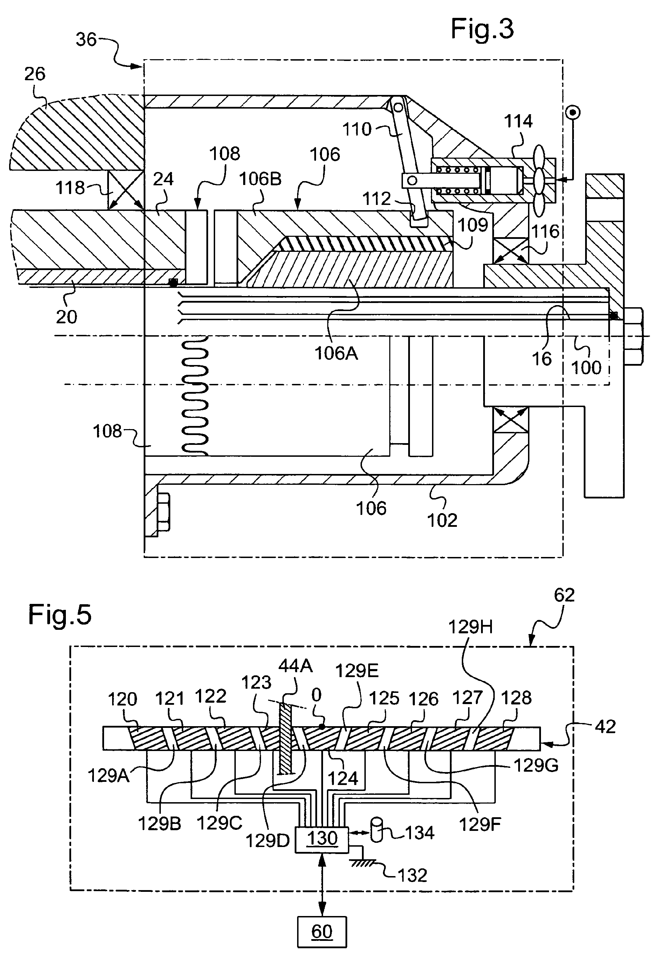

Le document US 2007/0265126 A décrit un véhicule industriel hybride comprenant :
- un arbre d'entraînement en rotation des roues motrices du véhicule, cet arbre présentant une première et une seconde extrémités, la première extrémité étant destinée à être mécaniquement raccordée aux roues motrices pour entraîner en rotation ces roues motrices (à droite dans les figures 1 et 3),
- un moteur à combustion comprenant un arbre moteur destiné à être mécaniquement raccordé à la seconde extrémité de l'arbre d'entraînement pour entraîner en rotation les roues motrices à l'aide du moteur à combustion,
- un moteur électrique comprenant un rotor solidaire d'un arbre rotatif destiné à entraîner en rotation la seconde extrémité de l'arbre d'entraînement,
- un mécanisme d'accouplement mécanique de l'arbre rotatif du moteur électrique à l'arbre d'entraînement pour entraîner en rotation les roues motrices à l'aide du moteur électrique, et
- une boîte de vitesses mécaniquement accouplée d'un côté à l'arbre moteur et de l'autre côté à la seconde extrémité de l'arbre d'entraînement,
   dans ce véhicule,
- l'arbre rotatif du moteur électrique est un arbre tubulaire creux traversé de part en part par un évidement ménagé le long de son axe de révolution,
- l'arbre d'entraînement est logé à l'intérieur de cet évidement de manière à pouvoir tourner librement à l'intérieur de l'arbre tubulaire creux, les première et seconde extrémités de l'arbre d'entraînement dépassant chacune d'un côté respectif de l'arbre tubulaire creux, et
- le mécanisme d'accouplement est déplaçable entre une position embrayée dans laquelle l'arbre tubulaire creux est mécaniquement accouplé en rotation à l'arbre d'entraînement et une position débrayée dans laquelle l'arbre d'entraînement peut librement tourner à l'intérieur de l'arbre tubulaire creux.

Dans les véhicules industriels connus, le rotor est directement monté sur l'arbre d'entraînement. Ces véhicules industriels hybrides sont typiquement connus sous l'appellation de véhicules hybrides à chaînes de traction en série par opposition aux véhicules hybrides à chaînes de traction parallèles, Dans les chaînes de traction en série, l'arbre moteur et mécaniquement raccordé à une extrémité de l'arbre du moteur électrique et l'autre extrémité de l'arbre du moteur électrique est mécaniquement raccordée aux roues motrices. Dans les chaînes de traction en série les arbres du moteur à combustion et du moteur électrique sont donc montés en « série » c'est-à-dire l'un derrière l'autre et non pas en parallèle comme dans les chaînes de traction parallèles. Les chaînes de traction en série présentent l'avantage d'être beaucoup moins encombrantes que les chaînes de traction parallèles.

Ici, par l'expression « arbre moteur » on désigne l'arbre du moteur à combustion.

Dans les chaînes de traction en série connues, l'arbre moteur entraîne systématiquement en rotation l'arbre du moteur électrique. Dès lors, lorsque seul le moteur à combustion est utilisé pour propulser le véhicule industriel, le rotor du moteur électrique est quand même entraîné en rotation par l'arbre moteur. Or le rotor du moteur électrique augmente considérablement l'inertie de la chaîne de traction ce qui pose des problèmes lors de la commande du moteur à combustion. Par exemple, de brusques variations de la vitesse angulaire de l'arbre moteur deviennent plus difficiles à réaliser.

L'invention vise à remédier à cet inconvénient en proposant un véhicule industriel hybride dans lequel les problèmes liés à l'inertie du rotor du moteur électrique peuvent être éliminés.

Elle a donc pour objet un véhicule industriel hybride conforme à la revendication 1.

Le véhicule ci-dessus conserve les avantages d'une chaîne de traction en série tout en évitant d'accroître inutilement l'inertie de la chaîne de traction. En effet, dans ce véhicule, lorsque le moteur électrique n'est pas utilisé, l'arbre d'entraînement et l'arbre du moteur électrique peuvent être mécaniquement désaccouplés l'un de l'autre en déplaçait le mécanisme d'accouplement vers sa position débrayée. Dans cette position, l'arbre d'entraînement, logé à l'intérieur de l'arbre tubulaire creux, n'entraîne pas en rotation cet arbre tubulaire creux ni, surtout le rotor solidaire de cet arbre. Ainsi, l'inertie de la chaîne de traction en série peut être considérablement réduite lorsque le moteur électrique n'est pas utilisé.

De plus, le fait que l'arbre d'entraînement soit situé en sortie de la boîte de vitesses facilite l'installation du moteur électrique dans le véhicule.

Les modes de réalisation de ce véhicule peuvent comporter une ou plusieurs des caractéristiques des revendications dépendantes.

Ces modes de réalisation du véhicule présentent en outre les avantages suivants :
- équiper le véhicule industriel de trois pantographes pour capter directement une tension triphasée permet d'utiliser un dispositif de distribution de cette tension triphasée dans lequel les pertes en ligne sont réduites ce qui économise de l'énergie électrique,
- mesurer la position de la caténaire par rapport au véhicule industriel permet de guider automatiquement le véhicule industriel le long d'une route ou d'une autoroute,
- utiliser un frotteur comprenant une succession de segments électriquement isolés les uns des autres permet de mesurer de façon fiable et robuste la position de la caténaire par rapport au véhicule et permet aussi d'éviter l'apparition d'arc électrique avec un frotteur voisin.
- accoupler directement l'arbre tubulaire creux sur l'arbre d'entraînement simplifie la réalisation du véhicule puisqu'il n'est pas nécessaire d'utiliser un système de réduction de vitesse angulaire entre l'arbre tubulaire creux et l'arbre d'entraînement,
- prévoir un circuit de refroidissement commun à la fois au moteur à combustion et au transformateur simplifie et limite les coûts de fabrication et d'exploitation du véhicule,
- une pompe alimentée par une batterie ou actionnée par t'arbre d'entraînement permet de faire circuler ce liquide caloporteur dans le circuit de refroidissement même si le moteur à combustion est à l'arrêt,
- utiliser des première et seconde pompes Entraînées respectivement par l'arbre moteur et l'arbre du moteur électrique rend possible la circulation du liquide caloporteur dans le circuit de refroidissement même si l'un de ces moteurs n'est pas en marche, et
- prévoir une vanne commandable dans le circuit de refroidissement permettant de faire circuler le liquide caloporteur dans une dérivation éloignée du moteur à combustion permet de ne pas refroidir le moteur à combustion lorsque celui-ci n'est pas utilise.

L'invention concerne aussi un ensemble conforme à la revendication 10.

L'invention sera mieux comprise à la lecture de la description qui va suivre donnée uniquement à titre d'example non limitatif et faite en se référant aux dessins sur lesquels :
- la figure 1 est une illustration schématique d'un véhicule hybride équipé d'un moteur à combustion et d'un moteur électrique,
- la figure 2 est une illustration schématique d'un dispositif de distribution de tension triphasée pour le véhicule industriel de la figure 1,
- la figure 3 est une illustration schématique et en coupe d'un dispositif d'accouplement de l'arbre du moteur électrique à un arbre d'entraînement des roues motrices du véhicule de la figure 1,
- la figure 4 est une illustration schématique et en perspective de pièces du dispositif d'accouplement de la figure 3,
- la figure 5 est une illustration schématique d'un capteur de la position d'une caténaire par rapport au véhicule de la figure 1,
- la figure 6 est une illustration schématique d'un circuit de refroidissement du moteur à combustion et d'un transformateur électrique du véhicule de la figure 1,
- la figure 7 est un organigramme d'un procédé de propulsion du véhicule de la figure 1,
- la figure 8 est une illustration schématique d'un autre mode de réalisation du véhicule de la figure 1,
- la figure 9 est une illustration schématique d'un autre mode de réalisation de la chaîne de traction du véhicule de la figure 1, et
- la figure 10 est une illustration schématique d'un autre mode de réalisation du circuit de refroidissement du véhicule de la figure 1.

Dans ces figures, les mêmes références sont utilisées pour désigner les mêmes éléments.

Dans la suite de cette description, les caractéristiques et fonctions bien connues de l'homme du métier ne sont pas décrites en détails.

La figure 1 représente un véhicule hybride 2. Ici, ce véhicule 2 est un véhicule industriel tel qu'un camion. Le véhicule 2 est un véhicule à propulsion arrière. Ce véhicule 2 est équipé d'un moteur à combustion 4 et d'un moteur électrique 6 mécaniquement raccordés en série pour entraîner en rotation des roues motrices 7 du véhicule 2.

Par exemple, le moteur 4 est un moteur diesel. Il est équipé d'un arbre moteur 8 raccordé à un arbre d'entrée 10 d'une boîte de vitesses 12 par l'intermédiaire d'un mécanisme 14 d'embrayage. Le mécanisme 14 est déplaçable entre une position embrayée dans laquelle l'arbre 8 est mécaniquement accouplé à l'arbre 10 de sorte que les arbres 8 et 10 tournent à la même vitesse, et une position débrayée dans laquelle l'arbre 8 peut tourner indépendamment de l'arbre 10.

La boîte de vitesses 12 présente également un arbre de sortie 16 constituant ici un arbre d'entraînement des roues motrices 7.

La boîte de vitesses 12 permet de fournir plusieurs rapports de vitesses entre l'arbre 10 et l'arbre 16 ainsi qu'un rapport de marche-arrière et un point mort. Lorsque la boîte de vitesses 12 est au point mort, l'arbre 10 est mécaniquement désaccouplé de l'arbre 16. Ainsi, la boîte de vitesses 12 forme un mécanisme d'accouplement déplaçable entre une position embrayée dans laquelle les arbres 10 et 16 sont mécaniquement accouplés en rotation, et une position débrayée dans laquelle l'arbre 16 peut tourner indépendamment de l'arbre 10 et donc de l'arbre 8.

Le moteur électrique 6 est monté autour de l'arbre 16. Ce moteur électrique 6 comprend :
- un arbre tubulaire creux 20 présentant un évidemment central 22 le long de son axe de révolution,
- un rotor 24, et
- un stator 26.

Par exemple, le moteur 6 est une machine électrique tournante triphasée. Le rotor 24 est monté sur la périphérie extérieure de l'arbre 20 sans aucun degré de liberté et placé au centre du stator 26. Le stator 26 est un stator triphasé présentant trois bornes de raccordement électrique pour recevoir chacune une phase respective d'une tension triphasée. Lorsque le stator 26 est alimenté en tension triphasée, celui-ci entraîne en rotation le rotor 24 qui, du coup, entraîne en rotation l'arbre 20. Le stator 26 est solidaire du carter de la boîte de vitesses 12 ou du châssis du véhicule 2.

L'arbre 16 traverse de part en part le moteur électrique 6. Il s'étend à cet effet à l'intérieur de l'arbre 20 dans l'évidemment 22. L'arbre 16 est logé à l'intérieur de l'évidement 22 de manière à ce qu'il puisse tourner librement à l'intérieur de cet évidement 22 sans entraîner en rotation l'arbre 20. Des extrémités de l'arbre 16 font saillie de chaque côté de l'arbre 20.

L'extrémité de l'arbre 16, opposé à la boîte de vitesses 12, fait saillie au-delà du moteur électrique 6. Cette extrémité de l'arbre 16 est mécaniquement raccordée en permanence aux roues motrices 7 par l'intermédiaire, par exemple, d'une transmission à cardans 30 et d'un pont arrière 32.

L'autre extrémité de l'arbre 16 est mécaniquement raccordée en permanence à la boîte de vitesses 12.

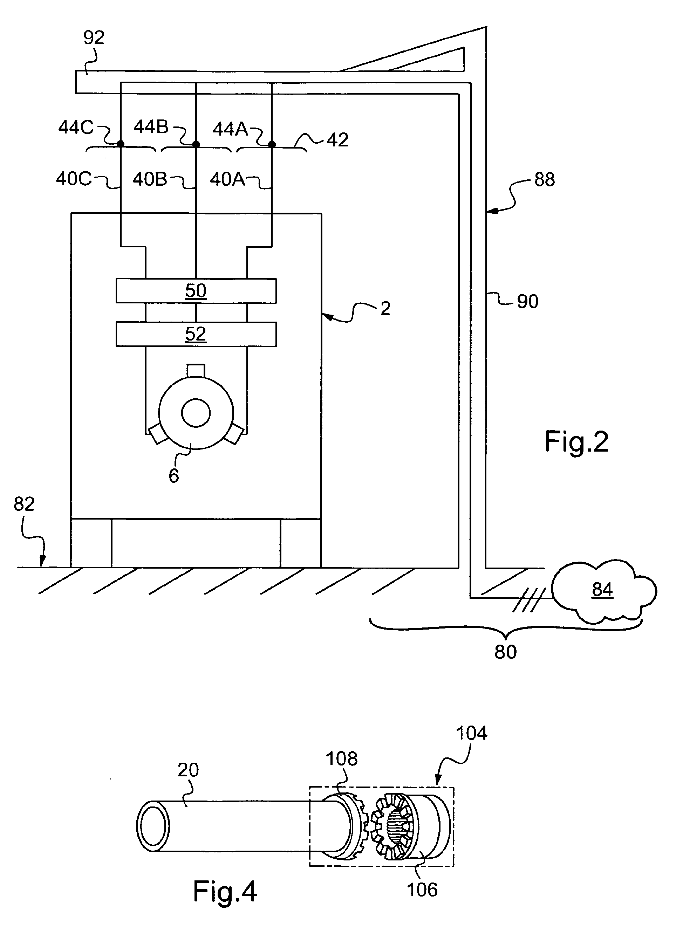

Pour que le moteur électrique 6 puisse entraîner l'arbre 16, un mécanisme d'accouplement 36 est prévu. Ce mécanisme d'accouplement est déplaçable entre une position débrayée dans laquelle l'arbre 16 peut librement tourner à l'intérieur de l'arbre 20 et une position embrayée dans laquelle l'arbre 20 est mécaniquement accouplé en rotation à l'arbre 16. Un exemple du mécanisme 36 est décrit plus en détail en regard des figures 3 et 4.

L'énergie électrique nécessaire à l'alimentation du moteur 6 est captée par l'intermédiaire de trois pantographes 40A, 40B et 40C (Figure 2) placés sur le toit de la cabine du véhicule 2. Sur la figure 1, seul le pantographe 40A est représenté. Ces pantographes 40A, 40B et 40C sont, par exemple, identiques et seul le pantographe 40A est décrit ici plus en détail.

Le pantographe 40A comporte un frotteur 42 apte à frotter contre une caténaire aérienne 44A pour capter une phase d'une tension triphasée pour alimenter le moteur 6.

Le pantographe 40A est déplaçable entre une position déployée dans laquelle le frotteur 42 est en contact électrique avec la caténaire 44A et une position repliée dans laquelle le frotteur 42 est électriquement isolé de la caténaire 44A. Le déplacement entre ces deux positions est actionné par un actionneur 46 commandable.

La tension triphasée captée par les pantographes 40A-40C est transmise à un transformateur électrique 50 embarqué à l'intérieur du véhicule 2. Le transformateur 50 est apte à transformer la moyenne tension captée par les pantographes 40A-40C en une basse tension. Ici, par le terme « moyenne tension », on désigne une tension triphasée supérieure à 15 kVac ou une tension continue supérieure à 1 000 Vdc. Par exemple, ici, la moyenne tension est une tension triphasée de 25 kVac.

La basse tension est une tension strictement inférieure à la moyenne tension. Ici la basse tension est une tension triphasée. Cette basse tension est appliquée aux bornes du moteur 6 par l'intermédiaire d'un variateur de vitesse 52 qui permet de régler la vitesse angulaire de rotation de l'arbre 20. Par exemple, le variateur 52 est un variateur de fréquence. Ce variateur 52 est piloté par une unité 54 de pilotage du moteur électrique. A cet effet, l'unité 54 est raccordée à des capteurs 56 et 58 des vitesses angulaires, respectivement, des arbres 16 et 20.

Pour simplifier la figure 1, les liaisons filaires entre les capteurs et les unités de pilotage ou de commande ne sont pas représentées.

L'unité 54 de pilotage comprend également un module 60 de guidage automatique du véhicule 2 en ligne droite. Ce module 60 est raccordé à un capteur 62 de la position de la caténaire 44A par rapport au véhicule 2. Un exemple de capteur 62 est décrit plus en détail en regard de la figure 5. Le module 60 est apte à commander un mécanisme 64 de braquage des roues directrices 66 du véhicule 2 afin de modifier automatiquement la direction de déplacement du véhicule 2 en fonction de la position mesurée par le capteur 62.

Le véhicule 2 comporte une unité 70 de commande du moteur 4 apte, notamment, à commander la vitesse de rotation de l'arbre 8 en fonction de différentes informations dont celles fournies par un capteur 72 de la vitesse angulaire de l'arbre 8. L'unité de commande 70 est raccordée à l'unité de pilotage 54 de manière à pouvoir échanger des informations avec cette dernière.

Le véhicule 2 comporte également un radiateur 74 placé à l'avant du véhicule de manière à pouvoir refroidir un liquide caloporteur circulant à l'intérieur d'un circuit de refroidissement du moteur 4 et du transformateur 50.

La figure 2 représente un dispositif 80 de distribution de tension triphasée installé le long d'une route 82 pour alimenter le véhicule 2 en tension triphasée. La route 82 est par exemple, une autoroute.

Le dispositif 80 comprend un réseau 84 de distribution de tension triphasée et, placés à intervalles réguliers le long de la route 82, des poteaux de suspension de caténaires 44A, 44B et 44C au-dessus de la route 82. Sur la figure 2, seul un poteau 88 a été représenté et sera décrit en détail. Les autres poteaux sont par exemple identiques au poteau 88.

Le poteau 88 est installé en bordure de la route 82 et comporte un mât vertical creux 90. Ce mât vertical 90 maintient une poutre horizontale 92 au-dessus de la voie de gauche de la route 82. La poutre 92 s'étend dans une direction transversale à la route 82.

La poutre 92 soutient trois liens verticaux à l'extrémité inférieure desquels sont fixées les caténaires 44A-44C. Chacune de ces caténaires correspond à une phase de la tension triphasée. Ces caténaires sont espacées les unes des autres d'un espace E_{c} suffisant pour éviter les arcs électriques entre elles. Par exemple, l'espace E_{c} est strictement supérieure à 1 mètre et de préférence supérieure à 1,20 mètre. Les caténaires 44A-44C sont suspendues au-dessus de la route 82 à une hauteur supérieure à 4 mètres et de préférence supérieure ou égale à 4,30 mètres.

Le frotteur 42 du pantographe 40A s'étend dans une direction transversale perpendiculaire à la direction de déplacement du véhicule 2. Ici, la longueur du frotteur 42 dans cette direction transversale est supérieure à 80 centimètres et de préférence supérieure ou égale à 1 mètre. Dans tous les cas, la longueur du frotteur 42 est strictement inférieure à l'espace E_{c} de manière à ce qu'aucun arc électrique ne puisse apparaître entre deux frotteurs voisins.

La figure 3 représente plus en détail le mécanisme 36 d'accouplement des arbres 16 et 20. Cette figure 3 est divisée entre une partie inférieure et une partie supérieure par un axe central 100. Dans sa partie supérieure, le mécanisme 36 est représenté dans sa position débrayée tandis que dans sa partie inférieure le mécanisme 36 est représenté dans sa position embrayée.

Le mécanisme 36 comprend un carter de protection 102 fixé sans aucun degré de liberté au stator 26 du moteur 6 à l'aide de moyens de fixation. Ces moyens de fixation ne sont pas décrits ici en détail. De préférence, le carter 102 est étanche et renferme un liquide lubrifiant.

A l'intérieur du carter 102 est logé un crabot 104 (voir figure 4) formé d'une bride coulissante 106 et d'une bride 108 fixe en translation. La bride 106 est montée déplaçable en translation le long de l'axe de révolution de l'arbre 16. Par contre, la bride 106 est solidaire de l'arbre 16 en rotation. Par exemple, l'arbre 16 est un arbre cannelé et la bride 106 comporte un évidemment central à partir duquel font saillie des nervures venant se loger dans les cannelures de l'arbre 16.

La bride 108 est fixée sans aucun degré de liberté à l'extrémité de l'arbre 20 de manière à ce que l'arbre 16 puisse librement tourner à l'intérieur de l'arbre 20 et dans un évidemment central de la bride 108. Des faces des brides 106 et 108 en vis-à-vis comportent des dents ou crabots destinés à s'emboîter les uns dans les autres de manière à accoupler en rotation les arbres 16 et 20 lorsque le mécanisme 36 est dans sa position embrayée. Ainsi, dans sa position embrayée, les vitesses angulaires des arbres 16 et 20 sont systématiquement identiques.

Dans la position débrayée, les dents de la bride 106 sont espacées de celles de la bride 108 de sorte que la bride 106 tourne librement par rapport à la bride 108. A l'inverse, comme représenté sur la partie inférieure de la figure 3, dans la position embrayée, les dents de la bride 106 sont emboîtées dans des creux entre les dents de la bride 108 de sorte que les arbres 16 et 20 sont solidaires l'une de l'autre en rotation.

La bride 106 est formée de deux pièces 106A et 106B concentriques mécaniquement accouplées l'une à l'autre par l'intermédiaire d'un joint élastique 109. La pièce 106A est directement montée sur l'arbre 16. La pièce 106B comporte toutes les dents destinées à s'emboîter entre les dents de la bride 108. Le joint 109 permet un débattement en rotation de la pièce 106B autour de la pièce 106A. La course de la pièce 106B autour de la pièce 106A est un arc de cercle. Lors de l'utilisation de la bride 106 dans le véhicule 2, cette course correspond au plus à la moitié de la largeur d'une dent. Ainsi, ce débattement permet de rattraper un défaut d'alignement entre les dents des brides 106 et 108.

Pour déplacer la bride 106 à coulissement le long de l'arbre 16 pour passer de la position débrayée à la position embrayée et vice-versa, le mécanisme 36 comporte une fourchette 110 dont une extrémité est montée par l'intermédiaire d'un pivot sur le carter 102. L'autre extrémité de la fourchette 110 est logée dans une rainure transversale 112 qui s'étend le long de toute la périphérie de la bride 106. Un vérin pneumatique 114 permet de déplacer l'extrémité de la fourchette 110 engagée dans la rainure 112 entre une position escamotée, dans laquelle les dents de la bride 106 ne sont pas en contact avec les dents de la bride 108, et une position active dans laquelle les dents de la bride 106 s'emboîtent dans les creux entre les dents de la bride 108.

Une extrémité du carter 102 repose sur l'arbre 16 par l'intermédiaire d'un roulement à billes 116 et d'un joint d'étanchéité.

De même, le stator 26 repose sur le rotor 24 ou sur l'arbre 20 par l'intermédiaire d'un roulement à billes 118.

La figure 5 représente plus en détail le capteur 62 de la position de la caténaire 44A par rapport au véhicule 2. Ici, ce capteur 62 comprend le frotteur 42 qui s'étend dans une direction transversale à la direction de déplacement du véhicule 2. Plus précisément, la figure 5 représente uniquement la surface du frotteur 42 susceptible de frotter sur la caténaire 44A lorsque le véhicule 2 se déplace. Le long de cette direction transversale, le frotteur 42 est formé d'une succession de segments électriquement conducteurs 120 à 128. Chaque segment 120 à 128 est apte à frotter sur la caténaire 44A de manière à capter une phase de la tension triphasée nécessaire à l'alimentation du moteur 6. Chaque segment 120 à 128 est électriquement isolé des autres segments du frotteur 42 par une bande 129A à 129H en matériau électriquement isolant. Les bandes 129A à 129H s'étendent dans une direction inclinée par rapport à la direction de déplacement du véhicule 2. L'inclinaison et la largeur de chaque bande 129A à 129H est choisie de manière à ce que lorsque la caténaire 44A , qui s'étend dans la direction de déplacement du véhicule, frotte sur l'une de ces bandes 129A à 129H, la caténaire 44A est simultanément en contact électrique avec les deux segments situés de part et d'autre de cette bande. Par exemple, si la caténaire 44A frotte sur la bande 129D alors elle est simultanément en contact électrique avec les segments 123 et 124. A l'inverse, dans la position de la caténaire 44A représentée sur la figure 5, la caténaire est uniquement en contact électrique avec un seul segment.

Chacun de ces segments 120 à 128 est raccordé à un module 130 d'identification du segment en contact avec la caténaire 44A. A cet effet, par exemple, le module 130 identifie le ou les segments du frotteur 42 qui sont actuellement en contact avec la caténaire 44A à partir de la différence de tension entre ces segments et une tension de référence 132. La tension de référence peut être la masse du véhicule ou une autre phase de la tension triphasée captée par l'intermédiaire d'un autre pantographe.

De plus, le module 130 est associé à une mémoire 134 contenant une table associant à chaque segment sa position par rapport à un centre O du frotteur 42. Ici, le centre O correspond au milieu du frotteur 42 dans la direction transversale. Typiquement, le centre O se trouve sur l'axe de symétrie verticale du frotteur 42. La position du centre O par rapport au véhicule est connue.

Ainsi, à partir des identifiants des segments actuellement en contact avec la caténaire 44A et de la table contenue dans la mémoire 134, le module 130 est apte à délivrer une indication sur la position de la caténaire 44A par rapport au centre O. Par exemple, sur la figure 5, la caténaire 44A est uniquement en contact électrique avec le segment 123. Le module 130 en déduit que la caténaire est située à gauche du centre O au centre du segment 123. Lorsque la caténaire est, par exemple, à la fois en contact électrique avec les segments 123 et 124, le module 130 en déduit que la caténaire 44A est située à gauche du centre O entre les segments 123 et 124. L'utilisation de bandes isolantes inclinées permet donc d'accroître la précision avec laquelle le module 130 détermine la position de la caténaire par rapport au cas où ces mêmes bandes ne seraient pas inclinées.

Ici tous les frotteurs des pantographes du véhicule 2 ont la même structure que le frotteur 42 qu'ils soient ou non utilisés pour mesurer la position d'une caténaire par rapport au véhicule. En effet, l'utilisation des segments 120 à 128 permet également de réduire la distance d'isolation électrique nécessaire pour éviter l'apparition d'arcs électriques entre frotteurs voisins et entre un frotteur et une ligne voisine. Par exemple, si la caténaire frotte uniquement sur le segment 120, aucune tension n'est appliquée sur le segment 128 qui se trouve à l'autre extrémité du frotteur 42. Ainsi, la distance qui doit être prise en compte pour éviter l'apparition d'arcs électriques entre le frotteur 42 et un frotteur voisin n'est pas la distance entre le segment 128 et l'extrémité la plus proche du frotteur voisin mais la distance entre le ou les segments sous tension du frotteur 42 et le ou les segments sous tension du frotteur voisin.

De plus, les bandes isolantes inclinées décrites ici permettent d'éviter des interruptions de l'alimentation électrique du moteur 6 qui pourraient se produire si les bandes isolantes n'étaient pas inclinées. En effet, dans cette dernière hypothèse, la caténaire pourrait, au moins temporairement frotter uniquement sur une bande isolante de sorte que l'alimentation du moteur 6 serait coupée.

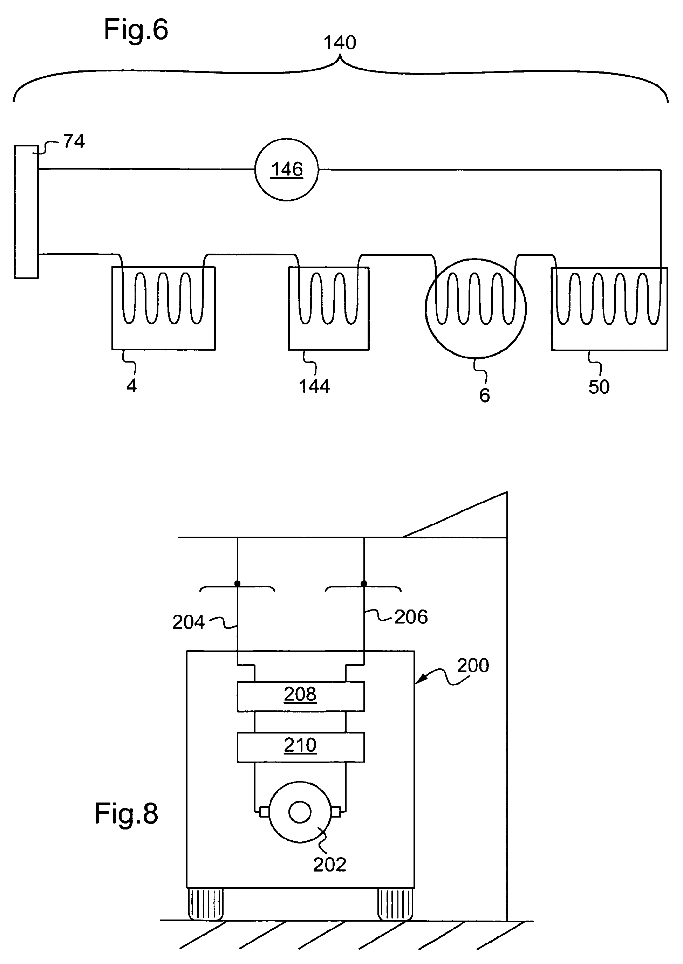

La figure 6 représente plus en détail un circuit 140 de refroidissement du moteur 4 et du transformateur 50. Ce circuit 140 est formé de tubulures à l'intérieur desquelles circule un liquide caloporteur tel que de l'eau glycogénée. Ce liquide est refroidi au niveau du radiateur 74. Ensuite, il est amené en contact thermique successivement avec le moteur 4, un ralentisseur hydraulique 144, le transformateur 50 et le moteur 6 . Le ralentisseur hydraulique 144 permet de freiner le véhicule 2 en transformant l'énergie cinétique du véhicule 2 en chaleur. De tels ralentisseurs sont connus sous le terme anglais de « retarder ». Les ralentisseurs hydrauliques sont bien connus et ne sont donc pas décrits en détail.

Le liquide caloporteur circule dans les tubulures du circuit 140 grâce à une pompe 146. Ici, la pompe 146 est une pompe électrique alimentée à partir d'une batterie du véhicule 2. Dans ces conditions, même si le moteur 4 est à l'arrêt, il est encore possible de faire circuler le liquide caloporteur à l'intérieur du circuit 140 pour refroidir, notamment, le transformateur 50.

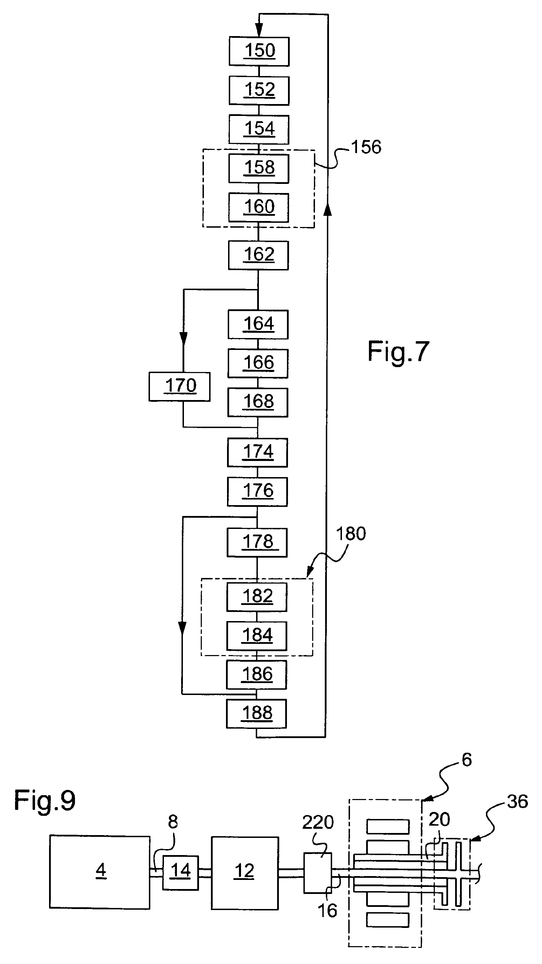

Le fonctionnement du véhicule 2 va maintenant être décrit plus en détail en regard du procédé de la figure 7.

Initialement, lors d'une étape 150, le véhicule 2 se positionne sous les caténaires du dispositif 80 de distribution de tension triphasée. Ensuite, lors d'une étape 152, les pantographes sont déplacés de leur position repliée vers leur position déployée de manière à ce que leur frotteur frotte sur une caténaire respective. Ensuite, le conducteur du véhicule 2 enclenche la propulsion électrique du véhicule 2. En réponse à cette commande du conducteur, lors d'une étape 154, l'unité 54 commande le variateur 52 pour démarrer le moteur 6. Ensuite, une phase 156 de synchronisation des vitesses angulaires des arbres 20 et 16 est réalisée. Au début de la phase 156, lors d'une étape 158, les vitesses des arbres 16 et 20 sont mesurées grâce, respectivement, aux capteurs 56 et 58. Ensuite, lors d'une étape 160, l'unité 54 commande le variateur 52 de manière à ce que la vitesse de l'arbre 20 devienne égale à celle de l'arbre 16. Ici, on considère qu'il y a égalité entre les vitesses de rotation des arbres 16 et 20 si leurs vitesses angulaires respectives sont identiques à 1 tr/min près.

Une fois les vitesses angulaires des arbres 16 et 20 synchronisées, lors d'une étape 162, l'unité 54 commande le mécanisme 36 pour que celui-ci se déplace de sa position débrayée vers la position embrayée. Lors de cette étape 162, si les vitesses angulaires des brides 106 et 108 ne sont pas parfaitement identiques, le joint élastique 109 permet une légère rotation de la pièce 106B par rapport à la pièce 106A de manière à permettre une synchronisation parfaite des vitesses angulaires des brides 106 et 108.

Dans le cas où le conducteur souhaite uniquement une propulsion électrique, alors lors d'une étape 164, l'arbre 8 est mécaniquement désaccouplé de l'arbre 16. Ici, cela est obtenu en faisant passer la boîte de vitesses à son point mort. Une fois l'arbre 8 mécaniquement désaccouplé de l'arbre 16, le moteur 4 est arrêté, lors d'une étape 166. Dès lors, lors d'une étape 168, le véhicule 2 est uniquement propulsé le long de la route 82 par le moteur électrique 6. Ce mode de propulsion uniquement électrique permet d'économiser le carburant et annule les émissions polluantes liées à la consommation de carburant par le moteur 4.

En alternative, le conducteur du véhicule 2 peut choisir un mode de propulsion hybride, c'est-à-dire un mode de propulsion dans lequel le véhicule 2 est propulsé à la fois par les moteurs 6 et 4. Dans ce cas, à l'issue de l'étape 162, on procède directement à une étape 170 de propulsion hybride sans passer par les étapes 164 à 168. Lors de cette étape 170, à la fois l'arbre moteur 8 et l'arbre 20 sont mécaniquement accouplés à l'arbre 16 de sorte que le véhicule 2 est propulsé en même temps à l'aide des deux moteurs 6 et 4. Lors de l'étape 170, l'unité 54 coopère avec l'unité 70 de commande pour synchroniser les vitesses angulaires des arbres 16 et 20.

Lorsque le véhicule 2 atteint une portion de route qui n'est pas équipée de caténaires permettant d'alimenter le moteur 6 ou suite à une commande du conducteur, les modes de propulsion hybride ou uniquement électrique sont arrêtés et un mode de propulsion thermique est engagé. Dans le mode de propulsion thermique, seul le moteur 4 est utilisé pour propulser le véhicule 2. A cet effet, lors d'une étape 174, le moteur électrique 6 n'est plus alimenté et le pantographe 40 est déplacé de sa position déployée vers sa position repliée. Ensuite, lors d'une étape 176, le mécanisme 36 est déplacé de sa position embrayée vers sa position débrayée.

Dans le cas où le véhicule 2 était dans le mode de propulsion uniquement électrique, alors :
- lors d'une étape 178, l'embrayage 14 est débrayé puis le moteur 4 est démarré, ensuite
- lors d'une phase 180, les vitesses angulaires des arbres 8 et 16 sont synchronisées.

Lors de l'étape 178, si cela n'avait pas déjà été fait, un rapport de vitesses est engagé dans la boîte de vitesses 12.

Pendant la phase 180, lors d'une étape 182, les vitesses angulaires des arbres 8 et 16 sont mesurées. Ensuite, lors d'une étape 184, en tenant compte du rapport de vitesses engagé dans la boîte de vitesses 12, les vitesses angulaires des arbres 8 et 16 sont synchronisées. Ici, lors de l'étape 184, on considère que les vitesses angulaires des arbres 8 et 16 sont synchronisées si la vitesse de l'arbre 16 est égale à la vitesse angulaire de l'arbre 8 multipliée par le rapport de vitesses de la boîte de vitesses 12 à plus ou moins 1tr/min.

Ensuite, à l'issue de la phase 180, lors d'une étape 186, l'embrayage 14 est embrayé de manière à accoupler mécaniquement l'arbre 8 à l'arbre 16.

Dès lors, lors d'une étape 188, le véhicule 2 est uniquement propulsé par le moteur 4.

En alternative, si le véhicule était dans le mode de propulsion hybride avant de passer au mode de propulsion thermique, alors à l'issue de l'étape 176, on procède directement à l'étape 188 sans passer par les étapes 178 à 186.

A l'issue de l'étape 188, le véhicule peut de nouveau engager le mode de traction uniquement électrique ou hybride en revenant à l'étape 150.

De nombreux autres modes de réalisation sont possibles. Par exemple, la figure 8 représente un mode de réalisation d'un véhicule 200 équipé d'un moteur à courant continu 202. Ce véhicule 200 est identique au véhicule 2 à l'exception du fait que le moteur 6 est remplacé par le moteur 202 et que le véhicule est non plus alimenté à partir d'une tension triphasée mais d'une tension continue. A cet effet, le véhicule 200 comporte uniquement deux pantographes 204 et 206 destinés à capter une tension continue. Les pantographes 204 et 206 sont raccordés au moteur 202 par l'intermédiaire d'un transformateur 208 de tension continue et d'un variateur 210 de la vitesse angulaire du moteur 202. Le dispositif 80 de distribution de tension triphasée est remplacé par un dispositif similaire adapté pour distribuer la tension continue.

La figure 9 représente une variante de la chaîne de traction du véhicule 2 dans laquelle un mécanisme d'accouplement 220 supplémentaire a été ajouté. Ce mécanisme 220 est placé entre l'arbre de sortie de la boîte de vitesses 12 et l'arbre 16 d'entraînement des roues motrices. Ce mécanisme 220 est déplaçable entre une position embrayée dans laquelle l'arbre de sortie de la boîte de vitesses 12 est mécaniquement accouplé en rotation à l'arbre 16 et une position débrayée dans laquelle l'arbre de sortie de la boîte de vitesses 12 est mécaniquement indépendant de l'arbre 16. Ce mécanisme 20 est par exemple commandable par l'unité 54 de pilotage. Le fonctionnement d'un véhicule équipé de la chaîne de traction représentée sur la figure 9 est identique à celui décrit en regard du procédé de la figure 7 à l'exception du fait que pour désaccoupler mécaniquement l'arbre 8 de l'arbre 16, c'est le mécanisme 220 qui est utilisé plutôt que la boîte de vitesses 12.

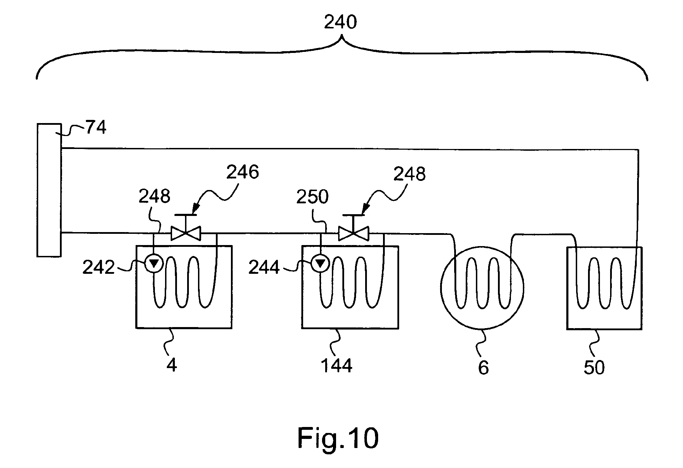

La figure 10 représente un circuit de refroidissement 240 identique au circuit de refroidissement 140 à l'exception du fait que la pompe 146 est remplacée par deux pompes 242 et 244 distinctes. La pompe 242 est actionnée par le moteur 4 tandis que la pompe 244 est actionnée par le moteur 6. Ces pompes 242 et 244 permettent chacune de faire circuler le liquide caloporteur dans le circuit de refroidissement. Ainsi, si le moteur 4 est à l'arrêt, le liquide caloporteur peut circuler dans le circuit de refroidissement grâce à la pompe 244. A l'inverse, si le moteur électrique est à l'arrêt, le liquide caloporteur circule dans le circuit de refroidissement grâce à la pompe 242.

De plus, de manière à éviter de refroidir le moteur 4 lorsque celui-ci est à l'arrêt, une vanne commandable 246 est prévue. Lorsque cette vanne 246 est dans une position fermée, le liquide caloporteur circule à proximité du moteur 4 de manière à le refroidir. A l'inverse, lorsque la vanne 246 est ouverte, le liquide caloporteur circule dans une dérivation 248 plus éloignée du moteur 4 de manière à moins refroidir ce moteur 4. Typiquement, la vanne 246 est placée dans sa position ouverte lorsque le moteur 4 et donc la pompe 242 sont à l'arrêt de manière à ne pas refroidir inutilement ce moteur 4. Dans ces conditions, le liquide caloporteur circule préférentiellement dans la dérivation 248 car la pompe 242 est à l'arrêt.

De façon similaire, il est également prévu dans le circuit 240 une vanne commandable 248. Lorsque la vanne 248 est dans une position fermée, le liquide caloporteur circule à proximité du transformateur 50 pour le refroidir. Lorsque la vanne 248 est dans une position ouverte, le liquide caloporteur circule préférentiellement dans une dérivation 250 plus éloignée du transformateur 50 de manière à moins refroidir ce transformateur. Ainsi, lors du fonctionnement du véhicule 2, lorsque le moteur électrique est à l'arrêt, la vanne 248 est ouverte de manière à ne pas réchauffer inutilement le liquide caloporteur.

Ici, les circuits de refroidissement 140 et 240 sont représentés dans le cas particulier où le moteur électrique et un ralentisseur hydraulique sont également refroidis. Toutefois, en variante, le ralentisseur hydraulique peut être omis. Le moteur électrique 6 peut également ne pas être refroidi.

S'il n'est pas envisagé de faire fonctionner le véhicule 2 dans un mode de propulsion uniquement électrique, alors la chaîne de traction décrite dans les différents modes de réalisation divulgués ici peut être simplifiée en supprimant par exemple le mécanisme 220 ou en maintenant fermé l'embrayage 14 ou une vitesse engagée dans la boîte de vitesses 12 de manière à maintenir systématiquement l'arbre 8 mécaniquement accouplé à l'arbre d'entrainement lorsque le moteur électrique est utilisé.

Le moteur électrique peut également être un moteur à aimants permanents.

La boîte de vitesses 12 est tout mécanisme, à base d'engrenages ou autre, capable de modifier le rapport entre les vitesses angulaires des arbres 8 et 16

Un seul pantographe peut être utilisé pour capter plusieurs phases de la tension d'alimentation. A cette effet, le frotteur 42 est remplacé par deux frotteurs électriquement isolés l'un de l'autre et apte chacun à capter une phase respective de la tension d'alimention. Dans ce mode de réalisation seul le mécanisme 46 d'actionnement du pantographe est commun à ces frotteurs.

Le transformateur 50 est omis si la tension délivrée par les caténaires est directement applicable aux bornes du moteur électrique. Par exemple, ce sera le cas si les caténaires délivrent une tension inférieure ou égale à 1 500 Vdc.

Ici, le capteur de la position de la caténaire par rapport au véhicule a été décrit dans le cas particulier où le frotteur 42 est commun au pantographe 40 et au capteur 62. En variante, le capteur 62 comporte uniquement un pantographe indépendant de ceux utilisés pour capter l'énergie nécessaire à l'alimentation du moteur 6.

Le capteur de la position de la caténaire peut être réalisé de très nombreuses façons. Par exemple, ce capteur peut être formé d'une caméra associée à un module de reconnaissance de forme permettant de déterminer la position de la caténaire par rapport au véhicule en fonction des images filmées.

Les caractéristiques de l'une quelconque des revendications indépendantes et, en particulier, les caractéristiques de leurs parties caractérisantes, peuvent être remplacées par les caractéristiques de l'une quelconque des revendications dépendantes. En particulier, l'alimentation du véhicule 2 par l'intermédiaire de trois pantographes pour capter une tension triphasée peut être mise en oeuvre indépendamment de la mise en oeuvre d'un arbre tubulaire creux telle que décrite ici. De plus, l'alimentation en triphasé d'un véhicule électrique s'applique aux véhicules industriels mais également à tout type de véhicule automobile dont notamment les voitures.

Le guidage du véhicule industriel en fonction de la position de la caténaire peut être mis en oeuvre indépendamment de l'utilisation d'un arbre tubulaire creux pour le moteur électrique. Ce guidage à partir de la caténaire s'applique lui-aussi à tout type de véhicule dont les véhicules automobiles.

Enfin, les caractéristiques du circuit de refroidissement décrites ici peuvent être mises en oeuvre indépendamment de la mise en oeuvre d'un moteur électrique avec un arbre tubulaire creux.

Ce qui a été décrit ici pour les véhicules hybrides industriels s'appliquent aussi aux véhicules hybrides automobiles.

## Revendications

1. Véhicule industriel ou automobile hybride comprenant :
- un arbre (16) d'entraînement en rotation des roues motrices du véhicule, cet arbre présentant une première et une seconde extrémités, la première extrémité étant destinée à être mécaniquement raccordée aux roues motrices pour entraîner en rotation ces roues motrices,
- un moteur (4) à combustion comprenant un arbre moteur (8) destiné à être mécaniquement raccordé à la seconde extrémité de l'arbre d'entraînement pour entraîner en rotation les roues motrices à l'aide du moteur à combustion,
- un moteur électrique (6) comprenant un rotor (24) solidaire d'un arbre rotatif (20) destiné à entraîner en rotation la seconde extrémité de l'arbre d'entraînement,
- un mécanisme (36) d'accouplement mécanique de l'arbre rotatif (20) du moteur électrique à l'arbre d'entraînement (16) pour entraîner en rotation les roues motrices à l'aide du moteur électrique, et
- une boîte de vitesses (12) mécaniquement accouplée d'un côté à l'arbre moteur (8) et de l'autre côté à la seconde extrémité de l'arbre d'entraînement (16),
**caractérisé en ce que** :
- l'arbre rotatif (20) du moteur électrique est un arbre tubulaire creux traversé de part en part par un évidement (22) ménagé le long de son axe de révolution,
- l'arbre d'entraînement (16) est logé à l'intérieur de cet évidement (22) de manière à pouvoir tourner librement à l'intérieur de l'arbre tubulaire creux, les première et seconde extrémités de l'arbre d'entraînement dépassant chacune d'un côté respectif de l'arbre tubulaire creux,
- le mécanisme (36) d'accouplement est déplaçable entre une position embrayée dans laquelle l'arbre tubulaire creux (20) est mécaniquement accouplé en rotation à l'arbre d'entraînement (16) et une position débrayée dans laquelle l'arbre d'entraînement (16) peut librement tourner à l'intérieur de l'arbre tubulaire creux (20), et
- le mécanisme (36) d'accouplement est apte à accoupler directement l'arbre tubulaire creux (20) et l'arbre d'entraînement (16) de manière à ce que dans la position embrayée les vitesses angulaires de ces deux arbres soient systématiquement identiques.

2. Véhicule selon la revendication 1, dans lequel le moteur électrique (6) est un moteur électrique triphasé et le véhicule comprend trois frotteurs (42) aptes à frotter chacun sur une caténaire aérienne respective d'un dispositif de distribution de tension triphasée pour capter chacun une phase respective de la tension triphasée, chacun de ces frotteurs (42) étant raccordé, par l'intermédiaire de différents équipements électriques embarqués à l'intérieur du véhicule, à une phase respective du moteur électrique (6) pour l'alimenter en énergie électrique.

3. Véhicule selon l'une quelconque des revendications précédentes, dans lequel le véhicule comprend :
- au moins un pantographe (44A) apte à frotter sur une caténaire aérienne d'un dispositif de distribution de tension triphasée pour capter la tension d'alimentation du moteur électrique,
- un capteur (62) d'une grandeur représentative de la position de la caténaire par rapport au véhicule, et
- un module (60) de guidage automatiquement de la direction du véhicule en fonction de la grandeur physique mesurée par le capteur (62) pour maintenir le pantographe en contact avec la caténaire.

4. Véhicule selon la revendication 3, dans lequel le capteur comporte :
- un frotteur (42) amené en contact avec la caténaire et s'étendant dans une direction transversale à la direction de déplacement du véhicule, ce frotteur comportant dans la direction transversale une succession de segments (120-128) en matériau électriquement conducteur isolés électriquement les uns des autres, chacun de ces segments étant apte à frotter sur la même caténaire lorsque le véhicule se déplace, et
- un module (130) d'identification du segment sur lequel la caténaire frotte à partir de la différence de tension entre ce segment et une tension de référence, et
- une table associant à chaque segment sur lequel la caténaire frotte, une position de la caténaire par rapport au véhicule.

5. Véhicule selon l'une quelconque des revendications précédentes, dans lequel la première extrémité de l'arbre d'entraînement (16) est mécaniquement raccordée en permanence aux roues motrices (7) par l'intermédiaire d'une transmission à cardan (30) et d'un pont arrière (32).

6. Véhicule selon l'une quelconque des revendications précédentes, dans lequel le véhicule comprend :
- un transformateur électrique (50) apte à convertir la tension captée par l'intermédiaire de pantographes en une tension appliquée aux bornes du moteur électrique (6) par l'intermédiaire d'un variateur (52) de vitesse, et
- un circuit (140 ; 240) de refroidissement dans lequel circule un liquide caloporteur, ce circuit de refroidissement amenant le même liquide caloporteur aussi bien en contact thermique avec le moteur (6) à combustion qu'avec le transformateur électrique (50) de manière à refroidir ces deux éléments à l'aide du même liquide caloporteur.

7. Véhicule selon la revendication 6, dans lequel le circuit (140) de refroidissement comprend une pompe (146) apte à faire circuler le liquide caloporteur dans le circuit de refroidissement indépendamment de la rotation de l'arbre moteur, cette pompe étant alimentée à partir d'une batterie du véhicule.

8. Véhicule selon la revendication 6, dans lequel le circuit de refroidissement comprend une première pompe (242) actionnée par l'arbre moteur (8) et une seconde pompe (244) distincte actionnée par l'arbre (20) du moteur électrique, ces première et seconde pompes étant chacune aptes à faire circuler le liquide caloporteur dans le circuit de refroidissement.

9. Véhicule selon l'une quelconque des revendications 6 à 8, dans lequel le circuit de refroidissement comporte une vanne commandable (246) déplaçable entre une position fermée dans laquelle le liquide caloporteur circule à proximité du moteur (4) à combustion pour le refroidir et une position ouverte dans laquelle le liquide caloporteur circule dans une dérivation (248) plus éloignée du moteur à combustion pour moins refroidir le moteur à combustion.

10. Ensemble **caractérisé en ce qu'**il comprend :
- un véhicule (2) conforme à l'une quelconque des revendications précédentes, et
- un dispositif de distribution de tension comprenant des caténaires (44A - 44C) disposées par rapport à une route (82) de manière à ce que le véhicule (2) puisse alimenter son moteur électrique (6) en faisant frotter des pantographes (40A - 40C ; 204, 206) solidaires du véhicules sur ces caténaires lorsque ce véhicule se déplace sur cette route.

## Claims

1. Industrial or automobile hybrid vehicle comprising:
- a drive shaft (16) for driving the drive wheels of the vehicle in rotation, this shaft having a first end and a second end, the first end being intended for being mechanically connected to the drive wheels to drive these drive wheels in rotation,
- a combustion engine (4) comprising a transmission shaft (8) intended for being mechanically connected to the second end of the drive shaft to drive the drive wheels in rotation by means of the combustion engine,
- an electric motor (6) comprising a rotor (24) fixedly joined to a rotating shaft (20) intended for driving the second end of the drive shaft in rotation.
- a mechanism (36) for the mechanical coupling of the rotating shaft (20) of the electric motor to the drive shaft (16) to drive the drive wheels in rotation by means of the electric motor, and
- a gear box (12) mechanically coupled on the one hand, to the transmission shaft (8) and, on the other hand, to the second end of the drive shaft (16),
**characterized in that**:
- the rotating shaft (20) of the electric motor is a hollow tubular shaft crossed from one side to the other by a recess (22) made along its axis of revolution,
- the drive shaft (16) is housed within this hollow (22) so that it can freely rotate within the hollow tubular shaft, the first and second ends of the drive shaft each extending beyond a respective side of the hollow tubular shaft,
- the coupling mechanism (36) can be shifted between an engaged position in which the hollow tubular shaft (20) is mechanically coupled in rotation to the drive shaft (16) and a disengaged position in which the drive shaft (16) can freely rotate within the hollow tubular shaft (20) and,
- the coupling mechanism (36) is capable of directly coupling the hollow tubular shaft (20) and the drive shaft (16) so that, in the engaged position, the angular speeds of these two shafts are systematically identical.

2. Vehicle according to claim 1, in which the electric motor (6) is a three-phase electric motor and the vehicle includes two pick-up shoes (42) each capable of making frictional contact with a respective overhead contact line of a three-phase voltage distribution device, so that each can pick up a respective phase of the three-phase voltage, each of these pick-up shoes (42) being connected by means of various pieces of electric equipment embedded within the vehicle, to a respective phase of the electric motor (6) to power it with electric energy.

3. Vehicle according to any one of the previous claims in which the vehicle comprises:
- at least one pantograph (44A) capable of making frictional contact with an overhead contact line of a three-phase voltage distribution device to pick up the power supply voltage of the electric motor,
- a sensor (62) of a physical value that represents the position of the overhead contact line relatively to the vehicle and
- a module (60) for automatically guiding the direction of the vehicle as a function of the physical value measured by the sensor (62) to keep the pantograph in contact with the overhead contact line.

4. Vehicle according to claim 3 wherein the sensor comprises:
- a pick-up shoe (42) brought into contact with the overhead contact line and extending in a direction cross-wise to the direction of movement of the vehicle, this pick-up shoe comprising, in the cross-wise direction, a succession of segments (120-128) made out of an electrically conductive material and electrically insulated from one another, each of these segments being capable of making frictional contact with the same overhead contact line when the vehicle is moving, and
- a module (130) for identifying the segment with which the overhead contact line makes frictional contact through the difference in voltage between this segment and a reference voltage, and
- a table associating, with each segment with which the overhead contact line makes frictional contact, a position of the overhead contact line relatively to the vehicle.

5. Vehicle according to any one of the above claims wherein the first end of the drive shaft (16) is mechanically and permanently connected to the drive wheels (7) by means of a cardan transmission unit (30) and a rear axle (32).

6. Vehicle according to any one of the above claims wherein the vehicle comprises:
- an electric transformer (50) capable of converting the voltage picked up by means of pantographs into a voltage applied to the terminals of the electric motor (6) by means of a speed regulator (52) and,
- a cooling circuit (140; 240) in which there circulates a heat-transfer liquid, this cooling circuit conveying said heat-transfer liquid into thermal contact with both the combustion engine (16) and the electric transformer (15) so as to cool both these elements by means of the same heat-transfer liquid.

7. Vehicle according to claim 6 wherein the cooling circuit (140) comprises a pump (146) capable of making the heat-transfer liquid circulate in the cooling circuit independently of the rotation of the transmission shaft, this pump being powered by a battery of the vehicle.

8. Vehicle according to claim 6 wherein the cooling circuit comprises a first pump (242) actuated by the drive shaft (8) and a second distinct pump (244) actuated by the shaft (20) of the electric motor, these first and second pumps being each capable of making the heat-transfer liquid circulate in the cooling circuit.

9. Vehicle according to any one of the claims 6 to 8 wherein the cooling circuit comprises a controllable valve (246) that can be shifted between a closed position in which the heat-transfer liquid circulates in proximity to the combustion engine (4) to cool it and an open position in which the heat-transfer liquid flows in a bypass (248) at a greater distance from the combustion engine to decrease the cooling of the combustion engine.

10. Assembly **characterized in that** it comprises:
- a vehicle (2) according to any one of the previous claims, and
- a voltage-distribution device comprising overhead contact lines (44A-44C) placed along a road (82) so that the vehicle (42) can power its electric motor (6) in causing pantographs (40A-40C; 204, 206), fixedly joined to the vehicles, to make frictional contact with these overhead contact lines when this vehicle moves on this road.

## Patentansprüche

1. Industrielles Fahrzeug oder Hybrid-Automobil, umfassend:
- eine Antriebswelle (16) der Antriebsräder des Fahrzeugs in Rotation, wobei diese Welle ein erstes und ein zweites Ende aufweist, wobei das erste Ende dazu bestimmt ist, mechanisch an die Antriebsräder angeschlossen zu werden, um diese Antriebsräder in Rotation anzutreiben,
- einen Verbrennungsmotors (4) mit einer Motorwelle (8), die dazu bestimmt ist, mechanisch an das zweite Ende der Antriebswelle angeschlossen zu werden, um die Antriebsräder mithilfe des Verbrennungsmotors in Rotation anzutreiben,
- einen Elektromotor (6) mit einem Rotor (24), der fest mit einer Rotationswelle (20) verbunden ist, die dazu bestimmt ist, das zweite Ende der Antriebswelle in Rotation anzutreiben,
- einen mechanischen Antriebsmechanismus (36) der Rotationswelle (20) des Elektromotors an der Antriebswelle (16), um die Antriebsräder mithilfe des Elektromotors in Rotation anzutreiben, und
- ein Schaltgetriebe (12), das an einer Seite der Motorwelle (8) und an der anderen Seite am zweiten Ende der Antriebswelle (16) mechanisch gekoppelt ist, **dadurch gekennzeichnet, dass**:
- die Rotationswelle (20) des Elektromotors eine hohle, röhrenförmige Welle ist, die durchgehend von einer Ausnehmung (22) durchquert wird, die entlang ihrer Revolutionsachse ausgespart ist,
- die Antriebswelle (16) im Innern dieser Ausnehmung (22) derart untergebracht ist, dass sie sich im Innern der hohlen röhrenförmigen Welle frei drehen kann, wobei die ersten und zweiten Enden der Antriebswelle jede jeweils eine Seite der hohlen, röhrenförmigen Welle überragen,
- der Kopplungsmechanismus (36) ist zwischen einer eingekuppelten Position, in der die hohle röhrenförmige Welle (20) mechanisch in Rotation an die Antriebswelle (16) gekoppelt ist, und einer ausgekoppelten Position, in der die Antriebswelle (16) sich frei im Innern der hohlen, röhrenförmigen Welle (20) drehen kann, verfahrbar, und
- der Kopplungsmechanismus (36) geeignet ist, die hohle, röhrenförmige Welle (20) und die Antriebswelle (16) derart direkt zu koppeln, dass die Winkelgeschwindigkeiten dieser zwei Wellen in der gekoppelten Position systematisch identisch sind.

2. Fahrzeug gemäß Anspruch 1, in dem der Elektromotor (6) ein Dreiphasen-Elektromotor ist und das Fahrzeug drei Schleiffedern (42) umfasst, von denen jede geeignet ist, jeweils auf einer Oberleitung einer Verteilervorrichtung für Dreiphasenspannung zu schleifen, um jede eine jeweilige Phase der Dreiphasenspannung zu erfassen, wobei jede dieser Schleiffedern (42) über unterschiedliche, im Innern des Fahrzeugs eingebaute elektrische Ausrüstungen an eine jeweilige Phase des Elektromotors (6) angeschlossen ist, um ihn mit elektrischer Energie zu versorgen.

3. Fahrzeug gemäß einem der vorherigen Ansprüche, in dem das Fahrzeug umfasst:
- wenigstens einen Pantographen (44A), der geeignet ist, auf einer Oberleitung einer Verteilervorrichtung der Dreiphasenspannung zu schleifen, um die Versorgungsspannung des Elektromotors zu erfassen,
- einen Sensor (62) in einer die Position der Oberleitung im Verhältnis zum Fahrzeug repräsentativen Größe und
- ein automatisches Führungsmodul (60) der Lenkung des Fahrzeugs in Abhängigkeit von der vom Sensor (62) gemessenen physikalischen Größe, um den Pantographen mit der Oberleitung in Kontakt zu halten.

4. Fahrzeug gemäß Anspruch 3, in dem der Sensor umfasst:
- eine Schleiffeder (42), die mit der Oberleitung in Kontakt gebracht wird und sich in einer transversalen Richtung zur Verfahrrichtung des Fahrzeugs erstreckt, wobei diese Schleiffeder in der transversalen Richtung eine Folge von Segmenten (120-128) aus elektrisch leitfähigem Material umfasst, die voneinander elektrisch isoliert sind, wobei jedes dieser Segmente geeignet ist, auf derselben Oberleitung zu schleifen, wenn sich das Fahrzeug verschiebt und
- ein Identifikationsmodul (130) des Segments, auf dem die Oberleitung ausgehend von der Spannungsdifferenz zwischen diesem Segment und einer Referenzspannung schleift und
- eine Tabelle, die jedem Segment, auf dem die Oberleitung schleift, eine Position der Oberleitung im Verhältnis zum Fahrzeug zuordnet.

5. Fahrzeug gemäß einem der vorherigen Ansprüche, in dem das erste Ende der Antriebswelle (16) permanent über eine Kardanübertragung (30) und eine hintere Brücke (32) mechanisch an die Antriebsräder (7) angeschlossen ist.

6. Fahrzeug gemäß einem der vorherigen Ansprüche, in dem das Fahrzeug umfasst:
- einen elektrischen Transformator (50), der geeignet ist, die über den Pantographen erfasste Spannung in eine Spannung zu konvertieren, die über ein Stromrichtergerät (52) auf die Klemmen des Elektromotors (6) angewendet wird, und
- einen Kühlkreislauf (140; 240), in dem eine Kühlflüssigkeit zirkuliert, wobei dieser Kühlkreislauf dieselbe Kühlflüssigkeit derart sowohl in thermischen Kontakt mit dem Verbrennungsmotor (6) bringt als auch mit dem elektrischen Transformator (50), als diese zwei Elemente anhand derselben Kühlflüssigkeit gekühlt werden.

7. Fahrzeug gemäß Anspruch 6, in dem die Kühlflüssigkeit (140) eine Pumpe (146) umfasst, die geeignet ist, die Kühlflüssigkeit im Kühlflüssigkeitskreislauf unabhängig von der Rotation der Motorwelle zirkulieren zu lassen, wobei diese Pumpe ausgehend von einer Batterie des Fahrzeugs versorgt wird.

8. Fahrzeug gemäß Anspruch 6, in dem der Kühlkreislauf eine erste Pumpe (242) umfasst, die von der Motorwelle (8) betätigt wird, und eine zweite, unterschiedliche Pumpe (244), die von der Welle (20) des Elektromotors betätigt wird, wobei diese erste und zweite Pumpte jeweils geeignet sind, die Kühlflüssigkeit im Kühlkreislauf zirkulieren zu lassen.

9. Fahrzeug gemäß Anspruch 6 bis 8, in dem der Kühlkreislauf ein steuerbares Ventil (246) umfasst, das zwischen einer geschlossenen Position, in der die Kühlflüssigkeit in der Nähe des Verbrennungsmotors (4) zirkuliert, um ihn abzukühlen, und einer offenen Position, in der die Kühlflüssigkeit in einer weiter vom Verbrennungsmotor entfernten Ableitung (248) verfahrbar ist, um den Verbrennungsmotor weniger abzukühlen.

10. Struktur, **dadurch gekennzeichnet, dass** sie umfasst:
- ein Fahrzeug (2) gemäß einer der vorherigen Ansprüche, und
- eine Verteilervorrichtung der Spannung mit Oberleitungen (44A - 44C), die im Verhältnis zu einer Straße (82) derart angeordnet sind, dass das Fahrzeug (2) seinen Elektromotor (6) versorgen kann, indem es mit dem Fahrzeug fest verbundene Pantographen (40A - 40C; 204, 206) zum Schleifen auf diesen Oberleitungen bringt, wenn dieses Fahrzeug sich auf dieser Straße verschiebt.
